# EUROPEAN PATENT APPLICATION

(11) **EP 2 645 120 A1**
(43) Date of publication of application: **02.10.2013**
(21) Application number: 13161607.0
(22) Date of filing: 28.03.2013
(51) Int. Cl.: G01S 7/02, G01S 7/48, G01S 7/38, G01S 7/495, G08G 1/052

(54) **Device for alerting to and/or preventing radar and/or laser measurements**

(30) Priority: 28.03.2012 NL 2008556
(71) Applicant: Stichting Noble House, 2182 DZ Hillegom (NL)
(72) Inventor: de Wilde, Tom Marnix Alexander, 2182 DZ Hillegom (NL); Dijkstra, Patrick, 3465 TJ Driebruggen (NL)
(74) Representative: Vernout, Robert

(57) **Abstract**

A device for alerting to and/for preventing radar and/or laser measurements, comprising a central processing unit, a radar detection unit and/or a laser detection unit, which is/are connected to the central processing unit, memory means comprising software which can be loaded into the central processing unit, an alerting unit which is connected to the central processing unit, and a location determination unit, such as a GPS unit, which is connected to the central processing unit and which can transmit location information to the central processing unit, said central processing unit being designed to deliver an alarm signal, an interference signal and/or another signal upon detection of a radar signal or laser signal, and wherein the central processing unit is designed to change one or more settings of the device in dependence on the location information that is received.

## Description

The present invention relates to a device for alerting to and/for preventing radar and/or laser measurements, comprising a central processing unit, a radar detection unit and/or a laser detection unit, which is/are connected to the central processing unit, memory means comprising software which can be loaded into the central processing unit, an alerting unit which is connected to the central processing unit, and a location determination unit, such as a GPS unit, which is connected to the central processing unit and which can transmit location information to the central processing unit, said central processing unit being designed to deliver an alarm signal, an interference signal and/or another signal upon detection of a radar signal or laser signal. The term "laser signal" as used within this context is to be understood to include other optical signals as well.

Such devices are known, they are used by drivers of vehicles to prevent speeding, or speeding tickets. The conditions in which the devices are used vary from location to location, however.

The detection conditions may vary from location to location as well. The area may abound with mountains and tunnels or, on the contrary, such mountains and tunnels may be absent, so-called "false alarms" may frequently or rarely occur in an area, etc.

The object of the invention is to provide a device which functions correctly in a manner which is simple for the user.

In order to accomplish that object, the central processing unit is designed to change one or more settings of the device in dependence on the location information that is received. In this way the functioning of the device can be adapted to local conditions or legislation, for example whether or not detection or jamming of radar or laser measurements is permitted in a jurisdiction, the radar and/or laser measurement equipment that is most used locally, or the local physical conditions, such as the presence or absence of mountains or buildings, which can influence the (desired) functioning of the device. Based on the location information, the desired settings of the device are retrieved and set in a database in the memory means.

In a first preferred embodiment of the invention, one setting of the device that is changed in dependence on the location information that is received, in combination with the feature that the device is designed to detect signals at several frequencies, bands and/or bandwidths, comprises the frequencies, the bands and/or bandwidths at which scanning takes place.

In another preferred embodiment of the invention, one stetting of the device that is changed in dependence on the location information that is received, in combination with the feature that the device is designed to detect signals at several frequencies, bands and/or bandwidths, comprises the frequencies, the bands and/or bandwidths of the received signals for which alarm signals delivered.

In another preferred embodiment of the invention, one setting of the device that is changed in dependence on the location information that is received, in combination with the feature that the device comprises a radar or laser jammer for delivering radar or laser interference signals, wherein the device is designed for performing several types of radar or laser jamming, comprises the type of radar or laser jamming performed by the device.

In another preferred embodiment of the invention, one setting of the device that is changed in dependence on the location information that is received, in combination with the feature that the device is designed for communicating with other devices in the area via radar or laser signals, comprises the type or radar or laser signals being transmitted. Said other devices may be present in vehicles that are present in the vicinity.

In another preferred embodiment of the invention, one setting of the device that is changed in dependence on the location information that is received, in combination with the feature that detection sensitivity settings, such as the duration and the frequency of the scanning intervals and/or the detection threshold can be changed, comprises the detection sensitivity settings.

In another preferred embodiment of the invention, one setting of the device that is changed in dependence on the location information that is received, in combination with the feature that the device is designed for determining with a certain degree of probability whether or not a signal comes from speed measurement equipment and delivering or not delivering an alarm signal in dependence thereon, comprises the alarm sensitivity setting to signals which, with a higher or lower degree of probability, do or do not come from speed measurement equipment, on the basis of which sensitivity setting the number of alarm signals to be delivered or suppressed is increased or decreased.

The preceding preferred embodiments are concerned with the problem that different measuring equipment is used in different jurisdictions, or even in sectors within jurisdictions, so that the device is preferably adapted to detect as many different types of measuring equipment as possible. Because of this the device is heavily loaded, and furthermore many unnecessary false alarms may be generated. Selectively and automatically adapting the operation of the device to the local conditions enables the device to function optimally.

In another preferred embodiment of the invention, one setting of the device that is changed in dependence on the location information that is received, in combination with the feature that the device is designed to alert the user if a stretch follows where location determination is not possible, such as a tunnel, comprises turning on or off the generation of an alert that a stretch follows where location determination is not possible.

This solves the problem that alarm signals are repeatedly delivered in areas where there are many tunnels. The user traveling in such areas knows, however, that location determination is not possible in tunnels and need not be alerted to this at every tunnel, or at least only once. In areas where tunnels are located far apart, it may be desirable to provide an alert for every tunnel.

In another preferred embodiment of the invention, one setting of the device that is changed in dependence on the location information that is received, in combination with the feature that the device comprises a user interface designed to communicate to the user an indication of the type of radar or laser signal that is received or the equipment that emitted the received signal, which indication is selected from collections of indications of types or radar or laser signals or equipment that emits such signals, comprises the collection of indications of types or radar or laser signals or equipment that emits said signals, which is used by the central processor unit.

This solves the problem that different types of equipment are used in different areas, which in some cases deliver the same (type) of signals, however. For the user it may be interesting to see an image of the detected equipment on a display screen. Using different collections of images of the equipment that is locally used in different areas reduces the risk of the wrong image being displayed.

In another preferred embodiment of the invention, one setting of the device that is changed in dependence on the location information that is received, in combination with the feature that the alarm signal comprises sound, comprises the sound level of the alarm signal. This setting is preferably automatically set only once, the first time the device is started. The fact is that it has been found that users in different countries on average have different preferences as regards the sound level of such devices.

In another preferred embodiment of the invention, one setting of the device that is changed in dependence on the location information that is received, in combination with the feature that the device comprises a user interface, such as a display screen and/or a loudspeaker, designed to communicate with the user is several languages, comprises the language in which the user interface communicates with the user. This setting is preferably automatically set only once, the first time the device is started, so that the language of the area where the device is first used by the user, which language is generally spoken by the user, is automatically set.

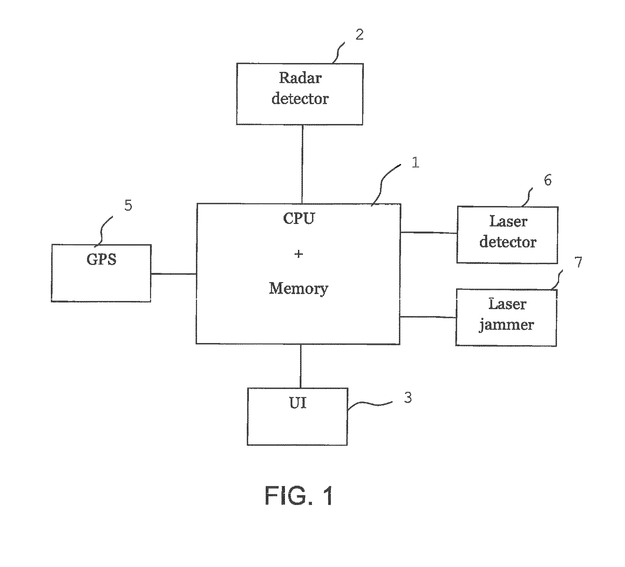

The invention will now be explained in more detail with reference to an embodiment as shown in figure 1, which schematically shows a block diagram of a device for alerting to and/or preventing radar and/or laser measurements.

According to figure 1, a device for alerting to and/or preventing radar and/or laser measurements comprises a radar detection antenna 2, a central processing unit 1 provided with a digital signal processing unit, which is connected to the radar detection antenna 2. The device further comprises a laser detection sensor 6 and a laser jammer 7 capable of transmitting laser jamming pulses, which laser detection sensor and which laser jammer are each connected to the central processing unit 1. The device further comprises a user interface 3, which is connected to the central processing unit 1. The user interface 3 comprises a display screen and a loudspeaker and has for its purpose to function as an alerting device, to which the end it is capable of delivering an audio and/or visual alarm signal. The user interface may also be used for sharing other information with the user.

The central processing unit 1 can be loaded with a computer programme from the memory, which programme is designed for determining characteristics of a radar signal received by the radar detection antenna 2 and delivering an alarm signal in dependence on said characteristics. The central processing unit 1 may further be loaded with a computer programme from the memory, which programme is designed to detect laser pulses by means of the laser detector 6 and having the laser jammer 7 deliver laser jamming pulses in dependence on said detection.

## Claims

1. A device for alerting to and/for preventing radar and/or laser measurements, comprising a central processing unit, a radar detection unit and/or a laser detection unit, which is/are connected to the central processing unit, memory means comprising software which can be loaded into the central processing unit, an alerting unit which is connected to the central processing unit, and a location determination unit, such as a GPS unit, which is connected to the central processing unit and which can transmit location information to the central processing unit, said central processing unit being designed to deliver an alarm signal, an interference signal and/or another signal upon detection of a radar signal or laser signal,
**characterized in that** the central processing unit is designed to change one or more of the following settings of the device in dependence on the location information that is received:
- in combination with the feature that the device is designed to detect signals at several frequencies, bands and/or bandwidths: the frequencies, the bands and/or bandwidths at which scanning takes place;
- in combination with the feature that the device is designed to detect signals at several frequencies, bands and/or bandwidths: the frequencies, the bands and/or bandwidths of the received signals for which alarm signals are delivered;
- in combination with the feature that the device comprises a radar or laser jammer for delivering radar or laser interference signals, wherein the device is designed for performing several types of radar or laser jamming: the type of radar or laser jamming performed by the device;
- in combination with the feature that the device is designed for communicating with other devices in the area via radar or laser signals: the type of radar or laser signals being transmitted;
- in combination with the feature that detection sensitivity settings, such as the duration and the frequency of the scanning intervals and/or the detection threshold can be changed: the detection sensitivity settings;
- in combination with the feature that the device is designed for determining with a certain degree of probability whether or not a signal comes from speed measurement equipment and delivering or not delivering an alarm signal in dependence thereon: the alarm sensitivity setting to signals which, with a higher or lower degree of probability, do or do not come from speed measurement equipment, on the basis of which sensitivity setting the number of alarm signals to be delivered or suppressed is increased or decreased;
- in combination with the feature that the device is designed to alert the user if a stretch follows where location determination is not possible, such as a tunnel: turning on or off the generation of an alert that a stretch follows where location determination, is not possible;
- in combination with the feature that the device comprises a user interface designed to communicate to the user an indication of the type of radar or laser signal that is received or the equipment that emitted the received signal, which indication is selected from collections of indications of types or radar or laser signals or equipment that emits such signals: the collection of indications of types or radar or laser signals or equipment that emits said signals, which is used by the central processor unit;
- in combination with the feature that the alarm signal comprises sound: the sound level of the alarm signal;
- in combination with the feature that the device comprises a user interface, designed to communicate with the user is several languages: the language in which the user interface communicates with the user.

2. A device for alerting to and/for preventing radar and/or laser measurements, comprising a central processing unit, a radar detection unit and/or a laser detection unit, which is/are connected to the central processing unit, memory means comprising software which can be loaded into the central processing unit, an alerting unit which is connected to the central processing unit, and a location determination unit, such as a GPS unit, which is connected to the central processing unit and which can transmit location information to the central processing unit, said central processing unit being designed to deliver an alarm signal, an interference signal and/or another signal upon detection of a radar signal or laser signal,
**characterized in that** the central processing unit is designed to change the following settings of the device in dependence on the location information that is received, in combination with the feature that the device is designed to detect signals at several frequencies, bands and/or bandwidths: the frequencies, the bands and/or bandwidths at which scanning takes place.

3. A device for alerting to and/for preventing radar and/or laser measurements, comprising a central processing unit, a radar detection unit and/or a laser detection unit, which is/are connected to the central processing unit, memory means comprising software which can be loaded into the central processing unit, an alerting unit which is connected to the central processing unit, and a location determination unit, such as a GPS unit, which is connected to the central processing unit and which can transmit location information to the central processing unit, said central processing unit being designed to deliver an alarm signal, an interference signal and/or another signal upon detection of a radar signal or laser signal,
**characterized in that** the central processing unit is designed to change the following settings of the device in dependence on the location information that is received, in combination with the feature that the device is designed to detect signals at several frequencies, bands and/or bandwidths: the frequencies, the bands and/or bandwidths of the received signals for which alarm signals delivered.

4. A device for alerting to and/for preventing radar and/or laser measurements, comprising a central processing unit, a radar detection unit and/or a laser detection unit, which is/are connected to the central processing unit, memory means comprising software which can be loaded into the central processing unit, an alerting unit which is connected to the central processing unit, and a location determination unit, such as a GPS unit, which is connected to the central processing unit and which can transmit location information to the central processing unit, said central processing unit being designed to deliver an alarm signal, an interference signal and/or another signal upon detection of a radar signal or laser signal,
**characterized in that** the central processing unit is designed to change the following settings of the device in dependence on the location information that is received, in combination with the feature that the device comprises a radar or laser jammer for delivering radar or laser interference signals, wherein the device is designed for performing several types of radar or laser jamming functions: the type of radar or laser jamming function performed by the device.

5. A device for alerting to and/for preventing radar and/or laser measurements, comprising a central processing unit, a radar detection unit and/or a laser detection unit, which is/are connected to the central processing unit, memory means comprising software which can be loaded into the central processing unit, an alerting unit which is connected to the central processing unit, and a location determination unit, such as a GPS unit, which is connected to the central processing unit and which can transmit location information to the central processing unit, said central processing unit being designed to deliver an alarm signal, an interference signal and/or another signal upon detection of a radar signal or laser signal,
**characterized in that** the central processing unit is designed to change the following settings of the device in dependence on the location information that is received, in combination with the feature that the device is designed for communicating with other devices in the area via radar or laser signals: the type or radar or laser signals being transmitted.

6. A device for alerting to and/for preventing radar and/or laser measurements, comprising a central processing unit, a radar detection unit and/or a laser detection unit, which is/are connected to the central processing unit, memory means comprising software which can be loaded into the central processing unit, an alerting unit which is connected to the central processing unit, and a location determination unit, such as a GPS unit, which is connected to the central processing unit and which can transmit location information to the central processing unit, said central processing unit being designed to deliver an alarm signal, an interference signal and/or another signal upon detection of a radar signal or laser signal,
**characterized in that** the central processing unit is designed to change the following settings of the device in dependence on the location information that is received, in combination with the feature that detection sensitivity settings, such as the duration and the frequency of the scanning intervals and/or the detection threshold can be changed: the detection sensitivity settings.

7. A device for alerting to and/for preventing radar and/or laser measurements, comprising a central processing unit, a radar detection unit and/or a laser detection unit, which is/are connected to the central processing unit, memory means comprising software which can be loaded into the central processing unit, an alerting unit which is connected to the central processing unit, and a location determination unit, such as a GPS unit, which is connected to the central processing unit and which can transmit location information to the central processing unit, said central processing unit being designed to deliver an alarm signal, an interference signal and/or another signal upon detection of a radar signal or laser signal,
**characterized in that** the central processing unit is designed to change the following settings of the device in dependence on the location information that is received, in combination with the feature that the device is designed for determining with a certain degree of probability whether or not a signal comes from speed measurement equipment and delivering or not delivering an alarm signal in dependence thereon: the alarm sensitivity setting to signals which, with a higher or lower degree of probability, do or do not come from speed measurement equipment, on the basis of which sensitivity setting the number of alarm signals to be delivered or suppressed is increased or decreased.

8. A device for alerting to and/for preventing radar and/or laser measurements, comprising a central processing unit, a radar detection unit and/or a laser detection unit, which is/are connected to the central processing unit, memory means comprising software which can be loaded into the central processing unit, an alerting unit which is connected to the central processing unit, and a location determination unit, such as a GPS unit, which is connected to the central processing unit and which can transmit location information to the central processing unit, said central processing unit being designed to deliver an alarm signal, an interference signal and/or another signal upon detection of a radar signal or laser signal,
**characterized in that** the central processing unit is designed to change the following settings of the device in dependence on the location information that is received, in combination with the feature that the device is designed to alert the user if a stretch follows where location determination is not possible, such as a tunnel: turning on or off the generation of an alert that a stretch follows where location determination is not possible.

9. A device for alerting to and/for preventing radar and/or laser measurements, comprising a central processing unit, a radar detection unit and/or a laser detection unit, which is/are connected to the central processing unit, memory means comprising software which can be loaded into the central processing unit, an alerting unit which is connected to the central processing unit, and a location determination unit, such as a GPS unit, which is connected to the central processing unit and which can transmit location information to the central processing unit, said central processing unit being designed to deliver an alarm signal, an interference signal and/or another signal upon detection of a radar signal or laser signal,
**characterized in that** the central processing unit is designed to change the following settings of the device in dependence on the location information that is received, in combination with the feature that the device comprises a user interface designed to communicate to the user an indication of the type of radar or laser signal that is received or the equipment that emitted the received signal, which indication is selected from collections of indications of types or radar or laser signals or equipment that emits such signals: the collection of indications of types or radar or laser signals or equipment that emits said signals, which is used by the central processor unit.

10. A device for alerting to and/for preventing radar and/or laser measurements, comprising a central processing unit, a radar detection unit and/or a laser detection unit, which is/are connected to the central processing unit, memory means comprising software which can be loaded into the central processing unit, an alerting unit which is connected to the central processing unit, and a location determination unit, such as a GPS unit, which is connected to the central processing unit and which can transmit location information to the central processing unit, said central processing unit being designed to deliver an alarm signal, an interference signal and/or another signal upon detection of a radar signal or laser signal,
**characterized in that** the central processing unit is designed to change the following settings of the device in dependence on the location information that is received, in combination with the feature that the alarm signal comprises sound: the sound level of the alarm signal.

11. A device for alerting to and/for preventing radar and/or laser measurements, comprising a central processing unit, a radar detection unit and/or a laser detection unit, which is/are connected to the central processing unit, memory means comprising software which can be loaded into the central processing unit, an alerting unit which is connected to the central processing unit, and a location determination unit, such as a GPS unit, which is connected to the central processing unit and which can transmit location information to the central processing unit, said central processing unit being designed to deliver an alarm signal, an interference signal and/or another signal upon detection of a radar signal or laser signal,
**characterized in that** the central processing unit is designed to change the following settings of the device in dependence on the location information that is received, in combination with the feature that the device comprises a user interface, designed to communicate with the user is several languages: the language in which the user interface communicates with the user.
